# EUROPEAN PATENT APPLICATION

(11) **EP 1 241 197 A1**
(43) Date of publication of application: **18.09.2002**
(21) Application number: 02251499.6
(22) Date of filing: 04.03.2002
(51) Int. Cl.: C08G 18/10, C08G 18/76, C08G 18/48, C08G 18/42

(54) **Method for preparing isocyanate-functional prepolymers with low residual isocyanate monomer content**

(30) Priority: 14.03.2001 US 275577 P
(71) Applicant: ROHM AND HAAS COMPANY, Philadelphia, Pennsylvania 19106-2399 (US)
(72) Inventor: Heinrich, Siegfried Edmund, 27711 Osterholz-Scharmbeck (DE); Wesselink, Gerard Antonius A. O., 3828 EZ Amersfoort (NL)
(74) Representative: Kent, Venetia Katherine

(57) **Abstract**

A method for forming an isocyanate-functional prepolymer having a low residual isocyanate content, comprising (a) reacting a polyol selected from the group consisting of polyether polyols, polyester polyols, polyester polyether polyols, acrylic polyols, glycols and mixtures thereof, and isocyanate monomer to form a reaction mixture comprising prepolymer with an NCO content in the range from 2.5 to 11.5% by weight, and an average NCO functionality in the range from 2.0 to 4.0; and (b) passing the reaction mixture comprising prepolymer and unreacted isocyanate through a short-path evaporator to remove unreacted isocyanate to a level of less than 0.15% by weight, is provided. Preferably, the short-path evaporator is operated at a pressure in the range from 0.1 to 10 Pa, and has a condenser temperature in the range from 25 to 75°C.

## Description

This invention relates to a method for forming an isocyanate-functional prepolymer with low levels of residual isocyanate monomer. More particularly, this invention relates to reacting a polyol, such as polyester polyols, polyether polyols, acrylic polyols, glycols, or combinations thereof, with isocyanate monomer, and subsequently removing unreacted isocyanate monomer by short-path distillation. The resulting prepolymer, which can be used directly as a solventless system, has a residual monomer level of less than 0.15% by weight, based on the total weight of finished prepolymer product.

Products with low residual isocyanate monomer are desired because of toxicity associated with such monomers. Preparation of prepolymers with low residual isocyanate monomer is known. Schmalstieg et al., U.S. Patent 5,747,628, discloses polyisocyanates formed by reacting low molecular weight (MW) polyether polyols with toluene diisocyanate (TDI) with ether and urethane groups, having an isocyanate (NCO) content of 11.8 to 14.4% by weight, an average NCO functionality of 3.1 to 4.0, and a residual TDI content of less than about 0.1% by weight. Such polyisocyanates are made in a process using a thin-film distillation unit to remove residual TDI monomer. The low MW polyether polyol and the NCO content and functionality are critical elements of the invention and contribute to the low melt viscosities of the product suitable for processing according to that patent. All references to molecular weight herein are to number average molecular weight.

The problem faced by the inventors is the provision of a method for forming prepolymers with low residual level of isocyanate monomer which minimizes product degradation and formation of undesirable side reactions during the monomer separation process, and maintains favorable product viscosity. The inventors have solved this problem by using a short-path evaporator as a means of removing isocyanate monomer which is operable at relatively low temperatures. This process can have a further advantage of conserving energy relative to known separation methods. A further advantage of the present invention is greater throughput than currently available processes.

According to one aspect of the present invention, there is provided a method for forming an isocyanate-functional prepolymer having a low residual isocyanate content, comprising (a) reacting a polyol selected from the group consisting of polyether polyols, polyester polyols, polyester polyether polyols, acrylic polyols, glycols and mixtures thereof, and isocyanate monomer to form a reaction mixture comprising prepolymer with an NCO content in the range from 2.5 to 11.5% by weight, and an average NCO functionality in the range from 2.0 to 4.0; and (b) passing the reaction mixture comprising prepolymer and unreacted isocyanate through a short-path evaporator to remove unreacted isocyanate to a level of less than 0.1% by weight. Preferably, the short-path evaporator is operated at a pressure in the range from 0.1 to 100 Pa. The condenser preferably has a temperature in the range from 25 to 75°C. In a preferred embodiment of the invention, the prepolymer is based on TDI.

Suitable polyols include polyether, polyester or polyether polyester polyols with hydroxyl functionality of 2 to 3, and a molecular weight greater than 500, preferably in the range from 500 to 5000; acrylic polyols with with a degree of polymerization of 3 to 50 and a molecular weight of 360 to 6000; and low molecular weight glycols, with a molecular weight in the range from 62 to 250. Suitable isocyanate monomers include aromatic and aliphatic isocyanates and mixtures thereof. Preferred isocyanates are toluene diisocyanate (TDI), hexamethylene diisocyanate (HDI), methylene diphenyl isocyanate (MDI), and xylene diisocyanate (XDI) and mixtures thereof.

The process of the present invention involves the use of one or more short-path evaporator to remove unreacted isocyanate monomer from a reaction mixture comprising isocyanate-functional prepolymer and unreacted isocyanate monomer. The reaction of polyol and isocyanate may be carried out according to any conventional method and in any conventional equipment. The resulting reaction mixture is transferred to the short-path evaporator. In one embodiment of the invention, the effluent from a first short-path evaporator may be transferred to a second short-path evaporator. According to one embodiment, the reaction mixture enters the evaporator at the top of the unit. From there, the reaction mixture is distributed on the inner wall of the unit, generally by means of a rotating cylinder. Wipers may be attached to this cylinder, which wipers may wipe the film formed on the inner wall of the unit. As the reaction mixture flows down the wall of the unit, isocyanate monomer evaporates and quickly condenses on the condenser core situated within the evaporator. The condenser is in close proximity to the unit interior walls. In one embodiment, the condenser may be 25 mm from the unit walls. The condenser is maintained at a suitable temperature for rapid condensation of the isocyanate monomer. This temperature may be determined by a person of ordinary skill in the art based on the nature of the reaction mixture and particularly the isocyanate monomer, as well as the other reactor parameters. In preferred embodiments of the invention, the temperature of the condenser is maintained in the range from 25 to 75°C, more preferably 25 to 45°C. For example, for TDI, the condenser is preferably at a temperature 25°C or higher, while for MDI the temperature would preferably be 41°C or higher. Condensed monomer is collected and can be recycled for use in subsequent reaction steps. Prepolymer product, with a residual isocyanate monomer content of less than 0.15% by weight, more preferably 0.1% by weight or less, is collected from the bottom of the evaporator unit and routed for storage or further processing.

The operating temperature of the surface of the evaporator wall is generally maintained in the range from 120 to 200°C, preferably, 140 to 180°C, more preferably 140 to 160°C. The reaction mixture may experience a temperature differential over the length of the film of 5 to 8°C. The pressure of the unit is preferably 10 Pa or less, more preferably 0.1 to 10 Pa, and in certain embodiments, may more preferably be in the range of 1 to 10 Pa. An advantage of the present invention is that side reactions and other degradation of the prepolymer product can be minimized or avoided by operating at lower temperatures. In general, lower operating pressures within the described ranges must be used if higher operating temperatures are used. Suitable pressures and temperatures may be readily determined by a person of ordinary skill in the art; for example, at operating temperatures of 165 to 190°C, the pressure may be in the range from 0.1 to 10 Pa; and at an operating temperature of 140°C, the pressure may be 0.1 Pa or lower. At an operating pressure of 1 Pa or less, the operating temperature is preferably 140 to 160°C. Suitable short-path evaporator units are manufactured by Buss-SMS GmbH (Butzbach, Germany) and UIC GmbH (Alzenau, Germany).

In a short-path evaporator, lower temperatures can be used as compared to those in thin-film distillation. The reaction mixture should be heated to a temperature far below the boiling point, since removal of unreacted monomer is achieved by evaporation from the fluid surface, along with condensation on a proximate condenser. There is no need to boil the reaction mixture to force off the monomer.

In contrast, in a traditional distillation unit, including a thin-film distillation unit, the reaction mixture is heated to greater temperatures in order to vaporize monomer throughout the reaction mixture fluid by boiling. These higher temperatures can lead to unwanted degradation of reaction product, including undesirable side chain reactions, and concomitant increases in viscosity. The present invention avoids these problems by allowing the use of lower temperatures, thereby yielding a high quality product while still reducing unreacted monomer levels to below 0.15% by weight, more preferably to levels of 0.1% by weight or less. Measurement of the unreacted isocyanate monomer may be achieved by gel permeation chromatography against samples with a known internal standard.

The prepolymers made according to the process of the invention preferably have an NCO content of 11.5% by weight or less, more preferably 2.5 to 11.0% by weight, still more preferably 5.0 to 11.0% by weight; and an average NCO functionality of 4.0 or less; more preferably 2.0 to 3.0. These prepolymers are formed by the reaction of a polyester polyol, polyether polyol, polyester polyether polyols, acrylic polyols, or glycol, or mixtures thereof, with a suitable isocyanate monomer.

Suitable polyols for use in the process of the invention include, but are not limited to, polyether polyols with a functionality of 2 to 3 and a molecular weight (MW), determined by gel permeation chromatography, in the range from 500 to 5000; polyester polyols with a functionality of 2 to 3 and a molecular weight in the range from 500 to 5000; polyester polyether polyols with a functionality of 2 to 3 and a molecular weight of 500 to 5000; acrylic polyols with a degree of polymerization of 3 to 50 and a molecular weight of 360 to 6000; and glycols with a low molecular weight in the range from 62 to 250. The process of the invention can be practiced using a single type of polyol or combinations or mixtures of two or more polyols. By way of example, the polyester polyols may comprise those formed from adipic acid, phthalic acid, isophthalic acid or terephthalic acid, as well as castor oil formed from glycerin and castor fatty acid, and glycols and triols such as ethylene glycol, neopentyl glycol and trimethylol propane; the polyether polyols may comprise polypropylene glycols, polyethylene glycols, polytetramethylene glycols; and the glycols may comprise propylene glycol, neopentyl glycol, hexanediol, and butanediol.

A preferred isocyanate for use in the invention is toluene diisocyanate (TDI). Other aromatic isocyanate monomers, such as xylene diisocyanate (XDI) and 4,4'-diphenyl methane diisocyanate (MDI), may also be used in the method of the invention. Other suitable isocyanates are aliphatic diisocyanates, including, but not limited to, hexamethylene diisocyanate (HDI) and isophorone diisocyanate (IPDI).

Suitable polyester polyols include those formed from diacids, or their monoester , diester, or anhydride counterparts, and diols. The diacids may be saturated C₄-C₁₂ aliphatic acids, including branched, unbranched, or cyclic materials, and/or C₈-C₁₅ aromatic acids. Examples of suitable aliphatic acids include, for example, succinic, glutaric, adipic, pimelic, suberic, azelaic, sebacic, 1,12-dodecanedioic, 1,4-cyclohexanedicarboxylic, and 2-methylpentanedioic acids. Examples of suitable aromatic acids include, for example, terephthalic, isophthalic, phthalic, 4,4'-benzophenone dicarboxylic, and 4,4'-diphenylamine dicarboxylic acids. The diols may be C₂-C₁₂ branched, unbranched, or cyclic aliphatic diols. Examples of suitable diols include, for example, ethylene glycol, 1,3-propylene glycol, 1,2-propylene glycol, 1,4-butandediol, 1,3-butandediol, hexanediols, 2-methyl-2,4-pentanediol, cyclohexane-1,4-dimethanol, and 1,12-dodecanediol. In one embodiment of the invention, the polyol used in making the polyester polyol is a polyether with a molecular weight in the range from 200 to 2000 and a functionality of 2 to 3.

Suitable polyether polyols include polyoxy-C₂-C₆-alkylene polyols, including branched and unbranched alkylene groups. Examples of suitable polyether diols include, for example, polyethylene oxide, poly(1,2- and 1,3-propyleneoxide), poly(1,2-butyleneoxide), and random or block copolymers of ethylene oxide and 1,2-propylene oxide.

Suitable polyester polyether polyols have a molecular weight of 500 to 5000 and a functionality of 2 to 3. They may be made from polyethers with a molecular weight of 200 to 2000 and a functionality of 2 to 3, with acids, for example, such as adipic acid, phthalic acid, isophthalic acid or terephthalic acid.

Suitable acrylic polyols include polyols based on monoethylenically unsaturated monomers, such as monoethylenically unsaturated carboxylic acids and esters thereof, styrene, vinyl acetate, vinyl trimethoxysilane, and acrylamides; including but not limited to methyl acrylate, butyl acrylate, ethyl acrylate, 2-ethylhexyl acrylate, hydroxylbutyl acrylate, hydroxyethyl acrylate, glycidyl acrylate, lauryl acrylate, and acrylic acid. The polymers may be homopolymers or copolymers. The copolymers may also contain significant portions of methacrylate monomers, for example, methyl methacrylate, butyl methacrylate, hydroxyethyl methacrylate, lauryl methacrylate, glycidyl methacrylate and methacrylic acid.

Preferably, the acrylic polyols are hydroxy-functional oligomers prepared by the process described in US Patent 5,710,227 and EP Patent 1 044 991, wherein the oligomers have a degree of polymerization (DP) of 3 to 50 (MW of 360 to 6000), preferably a DP of 5 to 20 (MW of 600 to 2400).

For forming the isocyanate-functional prepolymer at least one isocyanate monomer, i.e., an isocyanate bearing at least two isocyanate groups, is used. Suitable isocyanate monomers include, for example, toluene diisocyanate (and all isomers thereof), and aliphatic and cycloaliphatic polyisocyanates, and combinations thereof; such as, for example, m-phenylene diisocyanate, 2,4-toluene diisocyanate, 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 4,4'-diphenylmethane diisocyanate, 2,4-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate, 3,3'-dimethyl-4,4'-diphenylmethane diisocyanate and isophorone diisocyanate.

The isocyanate-functional prepolymer is formed by reacting the polyol selected from the group including polyether polyols, polyester polyols, glycols and mixtures thereof, and a diisocyanate, so as to form a prepolymer with an NCO content of 11.5% by weight or less and an average NCO functionality of 4.0 or less. The reaction to form such prepolymers may be carried out in any means available to a person skilled in art. These prepolymers are then suitable for further processing according to the present invention. In one embodiment, the prepolymer may be formed by reacting TDI and a polyester polyol with molecular weight of approximately 1000, comprising diethylene glycol, adipic acid and isophthalic acid. In another embodiment, the prepolymer may be formed by reacting TDI with castor oil.

The following examples are presented to illustrate the invention, in which the following abbreviations may be used: TDI = toluene diisocyanate; PPG = polypropylene glycol.

### EXAMPLE 1. Preparation of PPG/TDI prepolymer.

TDI was fed to a reactor at 25°C, and PPG 400 (waterless PPG with molecular weight of approximately 400) was added to the reactor. The TDI was a 80:20 mixture of 2,4-TDI and 2,6-TDI. The reactor was heated to 60°C, and thereafter the reactor was cooled to maintain a temperature in the range of 80-85°C, in view of exotherm. The reaction is run for 4 hours, at which time, the reaction mixture contains approximately 30% by weight of unreacted TDI. In this and other examples, unreacted monomer was measured by gel permeation chromatography.

The prepolymer was transferred by vacuum suction to a holding tank which also served as a buffer tank for the short-path evaporator unit. The prepolymer was then pumped from the holding (or buffer) tank to the short-path evaporator unit. The prepolymer was heated in the transfer line. The prepolymer reaction mixture with unreacted TDI monomer enters the evaporator from the top. The walls of the evaporator were maintained at about 180°C, while the condenser within was cooled to about 40°C. The vacuum in the unit was targeted to be at least 10 Pa (i.e., the pressure was 10 Pa or less). After a residency time of 1 to 2 minutes, prepolymer with residual monomer content of less than 0.1% by weight flowed out of the bottom of the unit.

TDI which is evaporated from the reaction mixture condenses on the inside of condenser. The TDI condensate was collected and pumped to a holding tank for future use. For re-use the ratio of 2,4-TDI to 2,6-TDI will generally have to be adjusted to achieve the desired starting ratio of 80:20.

### EXAMPLE 2. Preparation of Polyester/TDI prepolymer.

A prepolymer was formed using 530 g polyester, comprising diethylene glycol, adipic acid and isophthalic acid with molecular weight of approximately 1000, and 470 g TDI, according to the procedure described in Example 1, but with the additional step of passing the reaction mixture effluent from a first short-path evaporator through a second short-path evaporator, with the pressures and temperatures in the units as set forth in Table 1. The resulting residual monomer content of the samples is also shown in Table 1.

**Table 1.**

| Residual TDI Monomer in Polyester/TDI Prepolymer. | | | |
|---|---|---|---|
| Short-Path Evaporator I | 1 | 2 | 3 |
| Vacuum (Pa) | 30 | 30 | 30 |
| Temperature (°C) | 150 | 184 | 164 |

| Short-Path Evaporator II | | | |
|---|---|---|---|
| Vacuum (Pa) | 2 | 2 | 1.4 |
| Temperature (°C) | 190 | 164 | 164 |

| Results | | | |
|---|---|---|---|
| NCO Content (wt.%) | 6.2 | 6.2 | 6.2 |
| Monomer Content (wt.%) | 0.08 | 0.07 | 0.11 |

### EXAMPLE 3. Preparation of Castor Oil/TDI prepolymer.

A prepolymer was formed using 334 g castor oil and 666 g TDI, according to the procedure described in Example 1, but with the pressures and temperatures in the short-path evaporator as set forth in Table 2. The resulting residual monomer content of the samples is also shown in Table 2.

**Table 2.**

| Residual TDI Monomer in Castor Oil/TDI Prepolymer. | | | | | | |
|---|---|---|---|---|---|---|
| Short-path evaporator | 4 | 5 | 6 | 7 | 8 | 9 |
| Vacuum (Pa) | 50 | 50 | 50 | 9 | 9 | 9 |
| Temperature (°C) | 140 | 160 | 180 | 140 | 160 | 180 |

| Results | | | | | | |
|---|---|---|---|---|---|---|
| NCO Content (wt.%) | 8.8 | 8.8 | 8.6 | 8.5 | 8.9 | 8.3 |
| Monomer Content (wt.%) | 0.26 | 0.07 | 0.07 | 0.1 | 0.07 | 0.05 |

The data show that, at a suitable pressure within the short-path evaporator, the temperature of the unit can be substantially lowered while still retaining commercially significant recovery of unreacted isocyanate monomer. Likewise, at a given temperature, performance can be adjusted by lowering the pressure of the unit. The ability to effectively operate at lower temperatures permits removal of unreacted monomer with lower levels of unreacted side reactions occurring within the reaction mixture.

### EXAMPLE 4. Comparative Data with Thin Film Evaporator.

A polyester based prepolymer as in Example 2 (47% TDI; 53% polyester from diethylene glycol, isophthalic acid and adipic acid) was passed through a SAKO KV 0040 (= 0.4 m²) thin film evaporator at feed flow of 60 kg/hr, under the five sets of conditions shown in Table 3. The resulting residual monomer content of the five runs is also shown in Table 3.

**Table 3.**

| Residual TDI Monomer from Thin-Film Evaporator. | | | | | |
|---|---|---|---|---|---|
| Condition \ **Run** | **1** | **2** | **3** | **4** | **5** |
| Feed Temp. (°C) | 82 | 82 | 93 | 82 | 74 |
| Feed Input Temp. (°C) | 111 | 112 | 118 | 113 | 111 |
| Pressure (Pa) | 500 | 200 | 150 | 150 | 150 |
| Evaporator Temp. (°C) | 155 | 155 | 160 | 185 | 194 |
| Condenser Temp. (°C) | 21 | 21 | 29 | 32 | 33 |
| Residual Monomer (wt.%) | 17.03 | 13.6 | 12.19 | 6.25 | 5.63 |

Based on these results, it was concluded that thin film evaporation at low temperatures would not result in the desired low level of residual isocyanate monomer.

## Claims

1. A method for forming an isocyanate-functional prepolymer having a low residual isocyanate content, comprising
a) reacting a polyol selected from the group consisting of polyether polyols, polyester polyols, polyester polyether polyols, acrylic polyols, glycols and mixtures thereof, and isocyanate monomer to form a reaction mixture comprising prepolymer with an NCO content in the range from 2.5 to 11.5% by weight, and an average NCO functionality in the range from 2.0 to 3.0; and
b) passing the reaction mixture comprising prepolymer and unreacted isocyanate through a short-path evaporator to remove unreacted isocyanate to a level of less than 0.15% by weight.

2. The method of Claim 1 wherein the level of unreacted isocyanate is 0.1% by weight or less.

3. The method of Claim 1 wherein the isocyanate monomer is selected from the group consisting of aromatic isocyanates and aliphatic isocyanates, and mixtures thereof.

4. The method of Claim 3 wherein the isocyanate monomer is toluene diisocyanate, hexamethylene diisocyanate, xylene diisocyanate, methylene diphenyl isocyanate isophorone diisocyanate, or mixtures thereof.

5. The method of Claim 1 wherein the polyol is polypropylene glycol or castor oil, or mixtures thereof.

6. The method of Claim 1 wherein the short-path evaporator is operated at a pressure of less than 100 Pa.

7. The method of Claim 6 wherein the pressure is in a range from 0.1 to 10 Pa.

8. The method of Claim 1 wherein the short-path evaporator is operated at a pressure of less than 10 Pa and a temperature in the range from 140 to 160°C.

9. The method of Claim 1 wherein the short-path evaporator has a condenser temperature in the range from 25 to 75°C.

10. The method of Claim 8 wherein the temperature is in a range from 25 to 45°C.

11. The method of Claim 1 wherein the reaction mixture removed from the short-path evaporator is passed through one or more additional short-path evaporators.
